# EUROPEAN PATENT APPLICATION

(11) **EP 4 730 582 A1**
(43) Date of publication of application: **22.04.2026**
(21) Application number: 24207328.6
(22) Date of filing: 17.10.2024
(51) Int. Cl.: H02G 3/22, B60R 16/02, F16L 5/02, H02G 15/013

(54) **WATERPROOF CABLE FAIRLEAD DEVICE**

(71) Applicant: HellermannTyton s.a.s., 78197 Trappes (FR)
(72) Inventor: BENOIT, Merlin, 58310 Saint Amand en Puisaye (FR)
(74) Representative: Hernandez, Yorck

(57) **Abstract**

The disclosure relates to a cable fairlead device (1) for passing at least one cable in a pass-through direction (T) transverse to a main extension plane of the cable fairlead device (1), with a through-opening (2) at least for the at least one cable; with a sealing unit (3) made of a soft component, the sealing unit (3) running circumferentially around the through-opening (2); and with a stiffening unit (4) made of a hard component, where the hard component of the stiffening unit (4) is hard as compared to the soft component of the sealing unit (3), the stiffening unit (4) running circumferentially around the through-opening (2); wherein the stiffening unit (4) comprises one or more locking elements, each with a respective snap-in leg part (5a, 5b) protruding transversely to a main extension plane of the cable fairlead device (1) on a first side (A) of the cable fairlead device (1), with the snap-in leg part (5a, 5b) defining a hollow space (6a, 6b) that is accessible from a second side (B) of the cable fairlead device (1), the first side (A) being different from the second side (B), and with a respective locking finger part (7a, 7b) configured for the insertion into said hollow space (6a, 6b) from said second side (B) in order to lock the snap-in leg part (5a, 5b) in order to improve the known systems, in particular to provide a waterproof cable fairlead device (1) with high retention force and improved handling.

## Description

### Field of the invention

The disclosure relates to a cable fairlead device for passing at least one cable in a pass-through direction transverse to a main extension plane of the cable fairlead device, with a through-opening at least for the at least one cable, with a sealing unit made of a soft component, the sealing unit running circumferentially around the through-opening, and with a stiffening unit made of a hard component, where the hard component of the stiffening unit is hard as compared to the soft component of the sealing unit, the stiffening unit running circumferentially around the through-opening.

### Background

Cable fairlead systems or cable entry systems are used for cable installation in many machines, in particular enclosure housings and control cabinets of all kinds. These systems save time and space for providing a reliable and often watertight inlet for cables providing electric current or data current.

Such systems are known for instance from EP 3 906 600 A1, EP 3 921 906 A1, EP 3 791454 A1, EP 3 545 595 A1, EP 2 323 236 A2, and EP 2 614 564 B1, for instance, all of which share the common setup of a standard frame unit with different sets of inserts which can be adapted to the number and diameter of the respective cables that need to be passed and guided into the housing at hand.

The technical task, therefore, is to improve the known systems, in particular to provide a waterproof cable fairlead device with high retention force and improved handling.

### Overview

This task is solved by the objects of the independent claims. Advantageous embodiments will be apparent from the dependent claims, the description and the figures.

One aspect relates to a cable fairlead device for passing at least one cable in a pass-through direction transverse to a main extension plane of the cable fairlead device. The cable fairlead device is designed for a waterproof cable throughlet through a sheet of metal or plastic, like it is often required e.g. in a casing and/or in the automotive industry.

The cable fairlead device comprises a through-opening at least for the at least one cable. The cable may also be a rigid cable, i.e. a pipe. The through-opening may be configured also for bundles of cables and/or another object like a seal adaptor unit comprising one, two, or more sub-through-holes. The cable fairlead device also comprises a sealing unit made of a soft component and a stiffening unit made of a hard component. Both the sealing unit and the stiffening unit are running circumferentially around the through-opening completely or at least essentially (with small interruptions not affecting waterproofing or mechanical stability). The hard component of the stiffening unit is hard as compared to the soft component of the sealing unit. The soft component may be or comprise a rubber component and/or a thermoplastic elastomer (TPE). The hard component may be or comprise a plastic component, in particular a polyamide such as PA6 or a polypropylene (PP). Consequently, the stiffening unit primarily acts as a stabilizing frame enabling a high retention force, where the sealing unit primarily acts as a sealant between cable or other object/seal adaptor unit one the one hand side and sheet on the other hand side. Thus, the sealing unit may be arranged solely on one side of the sheet when mounted. The sealing unit may abut the through-opening, i.e. form and/or shape the rim of the through-opening. Preferably, the stiffening unit has a non-zero distance to said rim, i.e. not be part of the rim of the through-opening.

The stiffening unit comprises one or more locking elements, preferably two or more or exactly to locking elements, each with a respective snap-in leg part protruding transversely to a main extension plane of the cable fairlead device on a first side of the cable fairlead device. The locking elements are configured for reliably holding (i.e. holding in a locked state) the cable fairlead device in an opening of the sheet. The main extension plane of the cable fairlead device runs along a main extension plane of the sheet in a mounted state, i.e. when the cable fairlead device is snapped into, preferably also locked in, an opening of the sheet, at least in an environment of said sheet opening. Then, the snap-in leg part protrudes from one side of the sheet to the other side of the sheet, i.e. the snap-in leg part protrudes through a sheet plane. Preferably, the snap-in leg part(s) extend through the sealing unit.

On the first side of the of the cable fairlead device, and also on the corresponding side of the sheet plane, the snap-in leg part defining a hollow space that is accessible from a second side of the cable fairlead device, where the first side being different from the second side, in particular opposite sides. The stiffening unit also comprises a respective locking finger part which is configured for the insertion into said hollow space from said second side in order to lock the snap-in leg part. Thus, the locking finger part is configured to be inserted into the hollow space from the same side, i.e. in the same insertion direction, than the cable fairlead device is configured to be inserted into the opening of the sheet. The soft component of sealing unit may also protrude into a mouth of said hollow space, through which mouth the locking finger part is to be inserted into the hollow space. This gives the advantage of improved water resistance by a sealing of the locking finger part when inserted into the hollow space.

This gives the advantage that the opening of the sheet only needs to be accessed from one side when the cable fairlead device is mounted, and this while no tools are required. Thus, the described cable fairlead device enables a tool-free two-step installation (snapping the cable fairlead device into the sheet opening, locking the cable fairlead device in the sheet opening via locking finger part insertion) which results in a waterproof cable fairlead device with high retention force.

In one embodiment, it is provided that the locking finger part is connected to the rest of the stiffening unit by means of a hinge part, in particular a film hinge part. In addition to the (film) hinge, the hinge part may also comprise a lid. The lid may provide an enlarged surface reducing the pressure required for inserting the locking finger part into the hollow space. This gives the advantage of further improved handling (the locking finger part may not be lost) and also allows to pre-define an orientation of the locking finger part with respect to the hollow space, thus to adapt the shapes of the hollow space and the locking finger part to one another in a particular precise way, which fosters both waterproofing and reliability of the locking. This is particularly advantageous in combination with the embodiment of the next paragraph.

In a further embodiment, it is provided that the snap-in leg part and the locking finger part extend, at least when the locking finger part is inserted into the hollow space, along a height direction more than along a breadth direction. Therein height direction and breadth direction run transverse to each other within the main extension plane of the cable fairlead device. Correspondingly, the (film) hinge part of the last paragraph may extend along the height direction more than along the breadth direction, in particular is may reach at least 50%, preferably at least 70%, most preferably at least 85% of the extension of the snap-in leg part and/or the locking finger part and/or the hollow space. The increased length leads to optimized space requirements and an improved distribution of forces. Furthermore, the pre-definition of the orientation of the locking finger part with respect to the hollow space is improved, further nurturing the above advantages.

In particular, the snap-in leg part and/or the locking finger part and/or the hinge part and/or the hollow space extend along the height direction more than 2 times than they extend along the breadth direction, preferably more than 5 times, even more preferably more than 10 times. The height and breadth of the locking finger part is adapted to the height and breadth of the hollow space, to ensure waterproofing and locking reliability. The other measures may be varied independently.

In one embodiment, it is provided that the through-opening is an elongated through-hole, preferably with the one or more locking elements being arranged at the elongated sides of the elongated through-hole. In the above terminology, the elongated through-hole preferably is elongated along the height direction. The opening of the metal/plastic sheet preferably matches the shape of said through-opening, thus it may be an elongated opening. This allows to increase the height of the snap-in leg part and/or the locking finger part and/or the hinge part and/or the hollow space described in the above paragraphs, thus contributes to the advantages described there.

In a further embodiment, it is provided that the respective snap-in leg part comprises a support leg element and a flexible leg element. The support leg element is configured to at least mainly maintain its shape when the cable fairlead device is inserted into the sheet opening, and the flexible leg element is configured to be bent towards the support leg element when the cable fairlead device is inserted into the sheet opening (as known from clip-in/snap-in connections). The support leg element protrudes from the rest of the stiffening unit transversely to the main extension plane, i.e. the snap-in leg part is attached to the rest of the stiffening unit at a base of the support leg element. The flexible leg element is connected to the support leg element at an remote end of the support leg element, which remote end is an end remote from the rest of the stiffening unit, thus remote from said base of the support leg element (i.e. at a tip of the support leg element). The flexible leg element is attached with a base of the flexible leg element to the support leg element at the tip of the support leg element. The flexible leg element has a free leg end that is closer to the rest of the stiffening unit than said remote end of the support leg element; In other words, the flexible leg element has a tip that points back into the direction of the base of the support leg element. The hollow space is defined by support leg element and flexible leg element. This gives the advantage that the snap-in leg part can inserted with ease into the sheet opening and be locked reliably be the insertion of the locking finger into the hollow space.

Preferably, the flexible leg element comprises, at said free leg end, a recess with a compression slope surface and/or an abutment surface. In particular, the compression slope surface and/or the abutment surface are configured to engage with an edge of the sheet opening. The slope at the free leg end/the abutment surface allows the flexible leg to engage with the edge of the sheet opening already when the cable fairlead device is snapped in the sheet opening prior to the locking, thus preventing falling out of the sheet opening during mounting. When the locking finger part is inserted into the hollow space to lock the device and finish mounting, a pushing force is excerted onto second side of the cable fairlead device, which force compresses the sealing unit. Thus, the snap-in leg part is moved further through the sheet opening. The slope at the free leg end allows the flexible leg to bend outwards, away from the support leg and continue engaging with the edge of the sheet opening. The flexible leg is fixed in this bent-out position by the locking finger part, thus maintaining the increased force on the sealing unit. This gives the advantage of an improved positioning of the cable fairlead device in the opening, and, for the compression slope, contributes to an improved water tightness while maintaining easy mounting. The relative arrangement of abutment surface and compression slope give the possibility to adjust the force on the sealing unit for a given thickness of the sheet, or to ensure waterproofing even for sheets of varying thickness.

In particular, the compression slope surface may run, viewed along the breadth direction when the cable fairlead device is not snapped into the sheet opening, in an angle of 45°+/- 20° with respect to the main extension plane, preferably in an angle of 45°+/-10°, even more preferably in an angle of 45°+/-3°. The abutment surface may run, viewed along the breadth direction, transverse to the main extension plane. These values have proven particularly useful.

As a consequence to the above explanations, the respective locking finger part may be configured to prevent a movement of the free leg end by abutting at least partially, preferably via a flat surface, to both support leg element and flexible leg element when inserted into the hollow space between support leg element and flexible leg element.

In one embodiment, it is provided that the sealing unit and the stiffening unit are injection-mold as a one-piece, preferably as a two-component piece. Preferably, the cable fairlead device consists of said one-piece made from sealing unit and stiffening unit. This leads to even more easy handling and mounting.

In a further embodiment, the cable fairlead device comprises another device/a seal adaptor unit with one, two, or more sub-through-holes, preferably round sub-through-holes, for the at least one cable, which other device/ seal adaptor unit fits the through-opening of the cable fairlead device. In particular, the other device/stopper may be configured for a waterproof sealing between sealing unit and other device/ seal adaptor unit. Consequently said other device/ seal adaptor unit may be adapted, in an outer shape, to the inner shape of the through-opening. This improves the flexibility of the proposed solution in different application scenarios, thereby providing a waterproof cable fairlead device with high retention force and improved handling to many different applications.

Another aspect relates to a method for passing at least one cable through a sheet of metal or plastic. This method comprises at least the method steps of:
a) snapping-in the cable fairlead device into an opening of the sheet of metal or plastic from one side of the sheet of metal or plastic;
b) guiding the at least one cable through a through-opening of the cable fairlead device;
c) locking the cable fairlead device in the opening of the sheet of metal or plastic from said one side of the sheet of metal or plastic, with inserting a locking finger part from the one side of the sheet of metal or plastic into a hollow space which extends onto another side of the sheet of metal or plastic.

The method steps a)-c) may also be executed in another sequence than the described one.

Advantages and advantageous embodiments of the latter aspect correspond to the advantages and advantageous embodiments described for the former aspect, and vice versa.

The features and combinations of features described, including those of the general introduction, as well as the features and combinations of features disclosed in the figure description or in the figures alone, may be used not only alone or in the combination described, but also with other features or without some of the features disclosed, without departing from the scope of the invention. Consequently, embodiments are also part of the invention which are not explicitly shown and described in the figures, but which can be produced by separately combining the individual features disclosed in the figures. Therefore, embodiments and combinations of features which do not comprise all features of an originally formulated independent claim are also to be considered disclosed. Furthermore, embodiments and combinations of features are to be regarded as disclosed which deviate from or go beyond the combinations of features described in the dependencies of the claims.

In the context of the present disclosure, "transverse/along" may be understood as "at least substantially perpendicular/parallel", i.e. " perpendicular/parallel" or "substantially perpendicular/parallel", i.e. perpendicular/parallel except for a predetermined deviation. The predetermined deviation can, for example, be at most 15°, preferably at most 5°, particularly preferably at most 3°. Accordingly, "oppositely oriented" may be understood in the context of the present disclosure as "at least substantially oppositely oriented" i.e. "at least substantially anti-parallel oriented". The orientation of a plane may be determined by its normal vector. The limitation "substantially" may also refer to a percentage predetermined maximum permissible deviation, for example at most 15%, preferably at most 5%, particularly preferably at most 3%.

### Detailed description

Example embodiments are described in more detail below with reference to schematic drawings. Therein
- Fig. 1: shows an example embodiment of a cable fairlead device in a first isometric view;
- Fig. 2: shows the example cable fairlead device of Fig. 1 in a second isometric view;
- Fig. 3A: shows the example cable fairlead device of Fig. 1 mounted in an opening of a sheet in a top view;
- Fig. 3B: shows the mounted cable fairlead device of Fig. 3A in a sectional view;
- Fig. 3C: shows the cable fairlead device of Fig. 3A when inserted but not mounted in the opening in a sectional view; and
- Fig. 3D: shows an enlarged detail "C" of Fig. 3C, with the sheet removed.

In the figures, the same or functionally identical features are provided with the same reference signs.

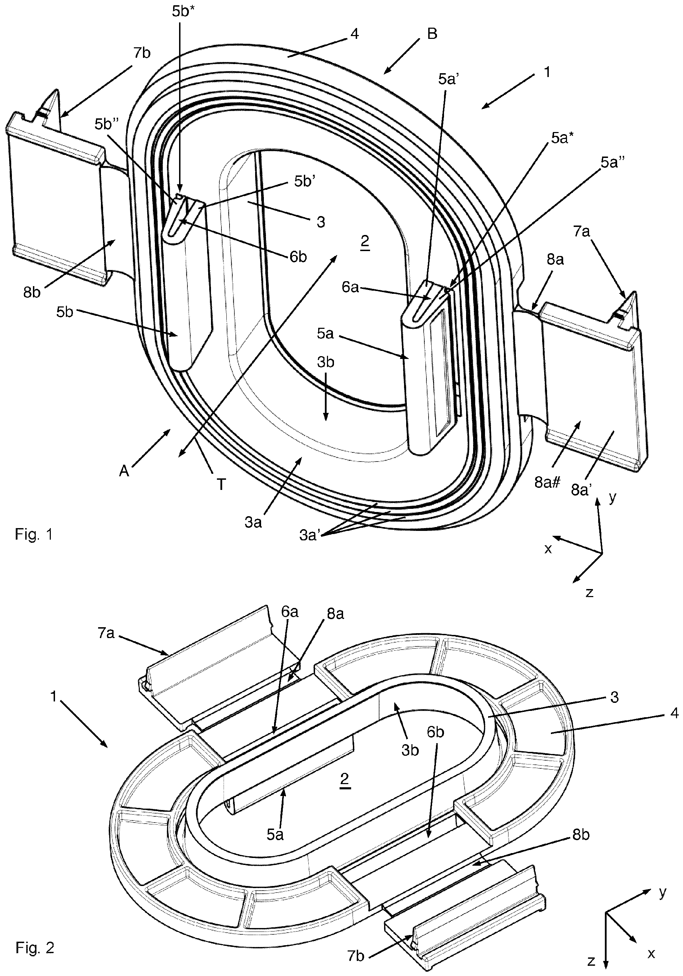

Fig. 1 shows an example embodiment of a cable fairlead device in an isometric view. The cable fairlead device 1 is configured for passing at least one cable in a pass-through direction T transverse to a main extension plane of the cable fairlead device 1, which main extension plane corresponds to the x-y-plane here. To this end, the cable fairlead device 1 has a through-opening 2 for at least the at least one cable (cable not shown). In the present example, the through-opening 2 is an elongated through-opening 2, with extended height as compared to its breadth (with the y-direction being the height direction and the x-direction a breadth direction in this example).

The cable fairlead device 1 comprises a sealing unit 3 made of a soft component and a stiffening unit 4 made of a hard component, the hard component being hard as compared to the soft component. The sealing unit 3 mainly extends in the x-y-plane, in particular with its contact surface 3a. In the present example, the contact surface 3a has an exemplary number of three sealing contours 3a' running circumferentially around the through-opening 2. In this example, the sealing unit 3 also has a flange with an inner surface 3b which forms, in the present example, a rim of the through-opening 2. To this end, the flange is advantageous but not required. The stiffening unit 4 also runs circumferentially around the through-opening 2 in this example, but in a non-zero distance it; thus the rim of the through-opening 2 is made only of the sealing unit 3 here.

The stiffening unit 4 comprises one or more, here two locking elements, each with a respective snap-in leg part 5a, 5b, and a respective locking finger part 7a, 7b which is movable, in particular movably attached to the rest of the stiffening unit 4.

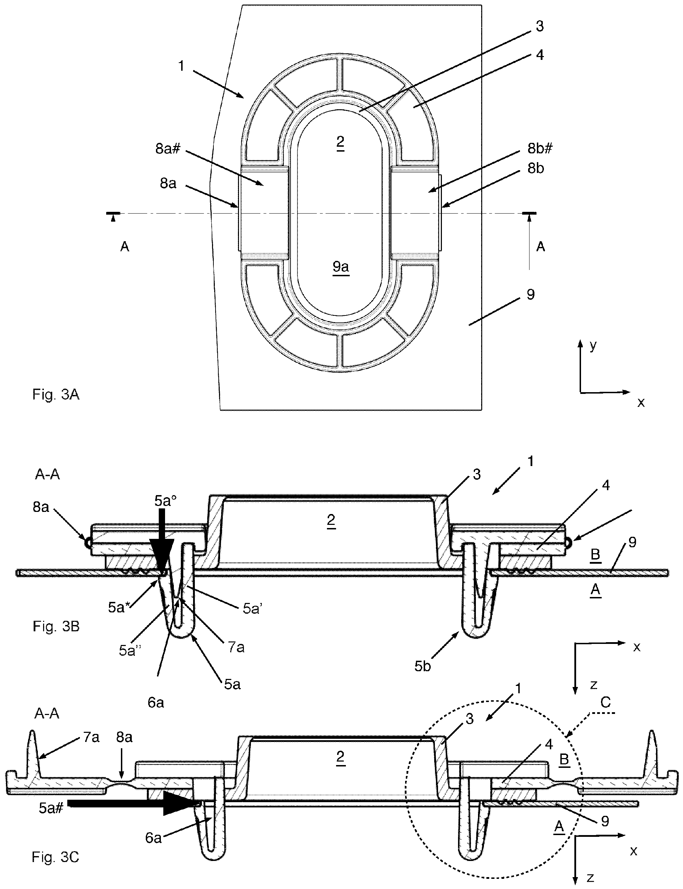

The respective snap-in leg parts 5a, 5b protruding transversely to the main extension plane of the cable fairlead device 1 on a first side A of the cable fairlead device 1, i.e. the positive z-direction here. The snap-in leg parts 5a, 5b define respective hollow spaces 6a, 6b that are accessible from a second side B of the cable fairlead device 1. So the first side A is oriented in the positive z-direction here, and the second side B in the negative z-direction. The respective locking finger parts 7a, 7b are configured for the insertion into said hollow spaces 6a, 6b from said second side B in order to lock the snap-in leg parts 5a, 5b and prevent removal of the cable fairlead device 1 from a sheet opening 9a (Fig. 3A) the cable fairlead device 1 is mounted (i.e. snapped-in and locked) into.

The locking finger parts 7a, 7b are connected to the rest of the stiffening unit 4 by means of respective hinge parts 8a, 8b which are designed as film hinge parts in this example. The hinge parts 8a, 8b also comprise a lid 8a'. The lids 8a' provide an enlarged surface 8a# which serves to reduce the pressure required for inserting the locking finger parts 7a, 7b into the hollow spaces 6a, 6b.

The snap-in leg parts 5a, 5b and the locking finger parts 7a, 7b extend, in the shown open state, i.e. the state when the cable fairlead device 1 is neither snapped into the sheet opening 9a nor locked, and/or a closed state as shown in Figs. 3A and 3B, i.e. the state when the cable fairlead device 1 is locked, along the height direction (y-direction here) more than along a breadth direction (x-direction here). In the shown example, the heights exceed the breadths by an exemplary factor larger 5.

In the shown example, the respective snap-in leg parts 5a, 5b each comprise a support leg element 5a', 5b' and a flexible leg element 5a", 5b". The support leg element 5a', 5b' protrudes in the z-direction, with the flexible leg element 5a", 5b" being connected to the support leg element 5a', 5b' at a remote end of the support leg element 5a', 5b', which remote end is the tip of the support leg element 5a', 5b' furthest protruding in the z-direction. The flexible leg elements 5a", 5b" have a free leg end that points back in the negative z-direction. Consequently, support leg elements 5a', 5b' and flexible leg elements 5a", 5b" define the hollow spaces 6a, 6b.

The flexible leg elements 5a", 5b" comprise, at the free leg end, a recess 5a*, 5b* with a compression slope surface and, in the present case, also an abutment surface, which will be described in more detail with respect to Figs. 3A and 3B.

Fig. 2 shows the example cable fairlead device 1 of Fig. 1 in a complementary isometric view.

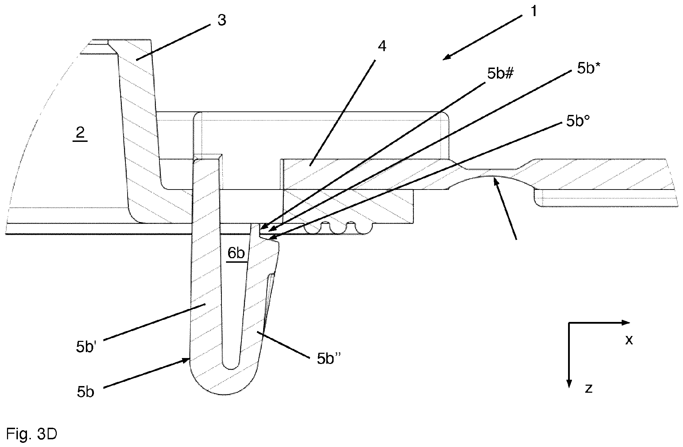

Fig. 3 shows the described cable fairlead device mounted in the opening 9a of a sheet 9 in a top view and defines a section A-A for which the corresponding sectional view is provided in Fig. 3B. Fig. 3C shows the cable fairlead device of Fig. 3B when inserted but not locked in the opening 9a.

As shown in Fig. 3A, the locking finger parts 7a, 7b are configured to prevent a movement of the flexible leg element 5a", 5b" free leg end with the recess 5a*, 5b* by abutting to both support leg element 5a', 5b' and flexible leg element 5a", 5b" when inserted into the hollow space 6a, 6b between support leg element 5a', 5b' and flexible leg element 5a", 5b" here.

The compression slope surface 5a° (indicated by the fat arrow) is, in the shown snapped-in and locked state, running along the x-y-plane, which is due to the bending of the flexible leg elements 5a", 5b" towards the support leg elements 5a', 5b' caused by the snapping-in of the cable fairlead device 1 into the opening 9a of the sheet 9. When not inserted, the compression slope surface 5a° runs, viewed in a sectional view according to the one of Figs. 3A and 3B, in an angle of 45°+/-20° with respect to the x-y-plane (parallel to the y-direction, i.e. parallel to the y-direction here), preferably in an angle of 45°+/-10°, even more preferably in an angle of 45°+/-3°. Correspondingly, the abutment surface 5a# (indicated by the fat arrow) may run transverse to the x-y-plane, here along the y-z-plane.

As apparent from Fig. 3D, the compression surface 5b° indeed is inclined, in this example, with respect to the main extension plane of the cable fairlead device 1 (x-y-plane here) by an angle of 45°+/- 20° in absence of any external force (thus, in a non-inserted open state). This contributes to maintaining a high pressure on the sealing unit 3 when the locking finger part 7b is inserted into hollow space 6b, as described above in more detail. Correspondingly, the abutment surface 5b# is running transverse to the main extension plane of the cable fairlead device 1 (x-y-plane here) in absence of any external force for the shown example. Angle of the compression surface 5b° and/or extension of the abutment surface 5b# in the z-direction may be adapted to the thickness of the sheet 9 for optimized results. In the show example, both compression surface 5b° and of the abutment surface 5b# run along the y-axis.

## Claims

1. Cable fairlead device (1) for passing at least one cable in a pass-through direction (T) transverse to a main extension plane of the cable fairlead device (1), with
- a through-opening (2) at least for the at least one cable;
- a sealing unit (3) made of a soft component, the sealing unit (3) running circumferentially around the through-opening (2); and
- a stiffening unit (4) made of a hard component, where the hard component of the stiffening unit (4) is hard as compared to the soft component of the sealing unit (3), the stiffening unit (4) running circumferentially around the through-opening (2); wherein
the stiffening unit (4) comprises one or more locking elements, each with
- a respective snap-in leg part (5a, 5b) protruding transversely to a main extension plane of the cable fairlead device (1) on a first side (A) of the cable fairlead device (1),
- the snap-in leg part (5a, 5b) defining a hollow space (6a, 6b) that is accessible from a second side (B) of the cable fairlead device (1), the first side (A) being different from the second side (B), and
- a respective locking finger part (7a, 7b) configured for the insertion into said hollow space (6a, 6b) from said second side (B) in order to lock the snap-in leg part (5a, 5b).

2. Cable fairlead device (1) according to the preceding claim,
wherein
the locking finger part (7a, 7b) is connected to the rest of the stiffening unit (4) by means of a hinge part (8a, 8b), in particular a film hinge part.

3. Cable fairlead device (1) according to any one of the preceding claims,
wherein
the snap-in leg part (5a, 5b) and the locking finger part (7a, 7b) extend, at least when the locking finger part (7a, 7b) is inserted into the hollow space (6a, 6b), along a height direction more than along a breadth direction; where height direction and breadth direction run transverse to each other within the main extension plane.

4. Cable fairlead device (1) according to the preceding claim,
wherein
the snap-in leg part (5a, 5b) and/or the locking finger part (7a, 7b) extend along the height direction more than 2 times than they extend along the breadth direction, preferably more than 5 times, even more preferably more than 10 times.

5. Cable fairlead device (1) according to any one of the preceding claims,
wherein
the through-opening (2) is an elongated through-hole, preferably with the one or more locking elements being arranged at the elongated sides of the elongated through-hole.

6. Cable fairlead device (1) according to any one of the preceding claims,
wherein
the respective snap-in leg part (5a, 5b) comprises a support leg element (5a', 5b') and a flexible leg element (5a'', 5b"), where the support leg element (5a', 5b') protrudes from the rest of the stiffening unit (4) transversely to the main extension plane, with
- the flexible leg element (5a", 5b") being connected to the support leg element (5a', 5b') at an remote end of the support leg element (5a', 5b'), which remote end is an end remote from the rest of the stiffening unit (4), and
- the flexible leg element (5a", 5b") having a free leg end that is closer to the rest of the stiffening unit (4) than said remote end of the support leg element (5a', 5b'); where
- the hollow space (6a, 6b) is defined by support leg element (5a', 5b') and flexible leg element (5a", 5b").

7. Cable fairlead device (1) according to the preceding claim,
wherein
the flexible leg element (5a", 5b") comprises, at the free leg end, a recess (5a*, 5b*) with a compression slope surface (5a°) and/or an abutment surface (5a#).

8. Cable fairlead device (1) according to the preceding claim,
wherein
the compression slope surface (5a°) runs, viewed along the breadth direction in an non-inserted state, in an angle of 45°+/-20° with respect to the main extension plane, preferably in an angle of 45°+/-10°, even more preferably in an angle of 45°+/-3°.

9. Cable fairlead device (1) according to any one of the two preceding claims,
wherein
the abutment surface (5a#) runs, viewed along the breadth direction, transverse to the main extension plane.

10. Cable fairlead device (1) according to any one of the four preceding claims,
wherein
the respective locking finger part (7a, 7b) is configured to prevent a movement of the free leg end by abutting to both support leg element (5a', 5b') and flexible leg element (5a", 5b") when inserted into the hollow space (6a, 6b) between support leg element (5a', 5b') and flexible leg element (5a", 5b").

11. Cable fairlead device (1) according to any one of the preceding claims,
wherein
the sealing unit (3) and the stiffening unit (4) are injection-mold as a one-piece.

12. Method for passing at least one cable through a sheet (9) of metal or plastic, comprising at least the method steps of:
a) snapping-in the cable fairlead device (1) into an opening (9a) of the sheet (9) of metal or plastic from one side (B) of the sheet of metal or plastic;
b) guiding the at least one cable through a through-opening (2) of the cable fairlead device (1);
c) locking the cable fairlead device (1) in the opening (9a) of the sheet (9) of metal or plastic from said one side (B) of the sheet (9) of metal or plastic, with inserting a locking finger part (7a, 7b) from the one side (B) of the sheet (9) of metal or plastic into a hollow space (6a, 6b) which extends onto another side (A) of the sheet (9) of metal or plastic.
